(19) Europäisches Patentamt
European Patent Office
Office européen des brevets

(11) Veröffentlichungsnummer: **0 279 437 B1**

(12) **EUROPÄISCHE PATENTSCHRIFT**

(45) Veröffentlichungstag der Patentschrift: **16.10.91**

(51) Int. Cl.$^5$: **C09B 5/24**

(21) Anmeldenummer: **88102332.9**

(22) Anmeldetag: **18.02.88**

# (54) Verfahren zur Herstellung eines blauen anthrachinoiden Dispersionsfarbstoffs.

(30) Priorität: **20.02.87 DE 3705386**

(43) Veröffentlichungstag der Anmeldung:
**24.08.88 Patentblatt 88/34**

(45) Bekanntmachung des Hinweises auf die Patenterteilung:
**16.10.91 Patentblatt 91/42**

(84) Benannte Vertragsstaaten:
**BE CH DE FR GB IT LI NL**

(56) Entgegenhaltungen:
**GB-A- 1 044 740**

(73) Patentinhaber: **BASF Aktiengesellschaft**
**Carl-Bosch-Strasse 38**
**W-6700 Ludwigshafen(DE)**

(72) Erfinder: **Michaelis, Eberhard, Dr.**
**Schlossgasse 8**
**W-6721 Weingarten(DE)**
Erfinder: **Hoch, Helmut, Dr.**
**Waldstrasse 61**
**W-6706 Wachenheim(DE)**

EP 0 279 437 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Der im Color Index als C.I. Disperse Blue 87 bezeichnete Dispersionsfarbstoff liefert auf PES-Fasermaterial wertvolle blaue Blaufärbungen.

Dieser Farbstoff ist nach Untersuchungen ein Gemisch aus den Farbstoffen der Formel (I)

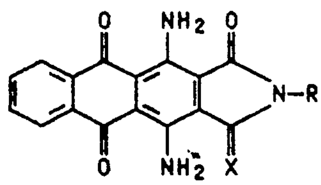

(I)

mit R = $-(CH_2)_3-OCH_3$ und X = NH und X = O im Verhältnis von ungefähr 2:1 Gewichtsteilen.

C.I. Disperse Blue 87 erhält man nach den Verfahren der DE-C 11 76 777 oder 11 81 349 durch Umsetzen von 1-Amino-4-nitroanthrachinon-2-carbonsäure oder deren Derivate mit wasserlöslichen ionogenen Cyaniden in Wasser, Alkoholen, Gemischen davon oder im Gemischen aus diesen Flüssigkeiten mit organischen Lösungsmitteln. Nach der DE-C 19 18 696 haben diese Verfahren den Nachteil, daß bei der großtechnischen Herstellung der Farbstoffe - wegen der Verwendung von Alkoholen - besondere Schutzmaßnahmen (Explosionsgefahr) getroffen werden müssen. Da das Ausgangsprodukt 1-Amino-4-nitroanthrachinon-2-carbonsäure bzw. deren Amide in Wasser und Alkoholen schlecht löslich sind, benötigt man bereits für verhältnismäßig Kleine Anstatze große Volumina am Lösungsmitteln und für die vollständige Umsetzung lange Reaktionszeiten. Die hierdurch bedingte geringe Raum-Zeit-Ausbeute macht die Verfahren der DE-C-11 76 777 und 11 81 349 unwirtschaftlich.

In den Beschreibungen der DE-C 11 76 777 und 11 81 349 wird zwar angegeben, daß die Umsetzung der Nitroverbindung mit den Cyaniden auch in Wasser erfolgen kann, jedoch wird in den Beispielen keine Umsetzung in rein wäßrigem Medium belegt. Nach den Beispielen 4 und 10 der DE-C 11 76 777, nach denen Farbstoffe erhalten werden, die C.I. Disperse Blue 87 entsprechen oder am nächsten liegen, erfolgt die Reaktion in wasserlöslichen Alkoholen, wobei im Laufe der Umsetzung Wasser zugegeben wird. Im Falle des Beispiels 10 der DE-C 11 76 777 und des Beispiels der DE-C 11 81 349 wird die Reaktion in einem Gemisch aus 240 Teilen Methanol und 35 Teilen Ethylenglykolmonoacetat und 56 Teilen Wasser bei Siedetemperatur zu Ende geführt.

Versuche, die Umsetzung von 1-Amino-4-nitroanthrachinon-2-carbonsäure-3'-methoxypropylimid mit Cyanid in gepufferten rein wäßrigem Medium (d.h. in Abwesenheit von Lösungsmitteln) durchzuführen, zeigten, daß die Reaktion nur schleppend erfolgte und der Umsatz nach 16 Stunden noch unvollständig war und daß Nebenprodukte gebildet wurden. Der erhaltene Farbstoff lieferte trübe rotstichige Färbungen ohne Brillanz auf Polyester (vgl. Vergleichsbeispiel 3).

Diese Nachteile umgeht das Verfahren der DE-C 19 18 696 dadurch, daß die Umsetzung der Nitroverbindung mit dem Cyanid in Formamid erfolgt. Dieses Verfahren hat den Vorteil einer kurzen Reaktionszeit von 3 bis 4 Stunden bei recht konzentriertem Reaktionsansatz, jedoch auch den großen Nachteil der Verwendung eines teuren Lösungsmittels, das noch den weiteren Nachteil hat, daß Formamid und seine Gemische mit Wasser technisch nur sehr aufwendig regeneriert werden können. Die bei dem Verfahren der DE-C 19 18 696 anfallenden Gemische aus Formamid, Ethylenglykolacetat und Wasser sind nicht wirtschaftlich zu regenerieren und müssen daher verbrannt oder über die Kläranlage entsorgt werden. Dies sind die großen kostenaufwendigen Nachteile dieses Verfahrens.

Ein weiterer Vorteil des Verfahrens der DE-C 19 18 696 ist, daß das Endprodukt in kurzen, dünnen Nädelchen anfällt, die sich besonders gut in die zur Färbung benötigten feinteiligen Formen überführen lassen. Die nach den Verfahren der DE-C 11 81 349 und 11 76 777 erhaltenen balkenförmigen Kristalle setzen der Dispergierung erheblichen Widerstand entgegen. Dieser Vorteil und die erhöhte Raum-Zeit-Ausbeute ist nach dem Stand der Technik nur unter Verwendung von Formamid als Reaktionsmedium unter Inkaufnahme der oben genannten gravierenden Nachteile zu erreichen.

Aufgabe der vorliegenden Erfindung war es, ein Verfahren zur Herstellung der Farbstoffe (I) aufzufinden, das die Nachteile des Verfahrens der DE-C 19 18 696 vermeidet, jedoch mindestens dessen Vorteile aufweist.

Erfindungsgemäß wird diese Aufgabe dadurch gelöst, daß die Umsetzung der Nitroverbindung in Wasser in Gegenwart eines quartären Ammoniumsalzes erfolgt.

Dementsprechend betrifft die Erfindung ein Verfahren zur Herstellung von blauen anthrachinoiden

Dispersionsfarbstoffen durch Umsetzen von 1-Amino-4-nitroanthrachinoncarbonsäureamiden der Formel (II)

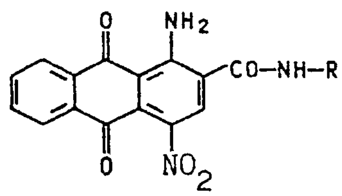

(II),

in der R für $C_1$- bis $C_6$-Alkyl, 2-($C_1$- bis $C_6$-Alkoxyl-ethyl, 3-($C_1$- bis $C_6$-Alkoxy)-propyl oder 3-[2'(-$C_1$- bis $C_4$-Alkoxy)-ethoxy]-propyl steht, mit Cyaniden in wäßrigem Medium in Gegenwart von Hydroxylionen abfangenden Mitteln bei Temperaturen von oberhalb 20° C, das dadurch gekennzeichnet ist, daß man die Umsetzung in Wasser im pH-Bereich von 7,5 bis 10,5 und in Gegenwart mindestens eines quartären Ammoniumsalzes bei 60 bis 100° C durchführt.

Nach dem Verfahren erhält man die Verfahrensprodukte in hoher Reinheit und gleichzeitig hoher Raum-Zeit-Ausbeute in feinteiliger Form. Die Umsetzung ist bei 70 bis 100° C in 4 Stunden vollständig, während bei der Umsetzung nach der DE-C 11 76 777 und 11 81 349 sowohl in Wasser wie auch in Alkoholen oder Gemischen davon auch nach langen Reaktionszeiten keine vollständige Umsetzung erfolgt.

Die nach dem erfindungsgemäßen Verfahren erhaltenen Farbstoffe entsprechen bei Verwendung von 1-Amino-4-nitroanthrachinon-2-carbonsäure-3'-methoxypropylimid in der Farbstärke, der Brillanz, dem Farbton und den Echtheitseigenschaften mindestens dem nach dem Verfahren der DE-C 19 18 696 in Formamid erhaltenen Disperse Blue 87.

Die wirtschaftlichen, technischen unhd ökologischen Vorteile des erfindungsgemäßen wäßrigen Verfahrens liegen auf der Hand: Wegfall der Regeneration, Verringerung der Belastung der Kläranlage, Wegfall der aufwendigen Explosionsschutz-Vorsorgen, Wegfall der Vorratshaltung von Lösungsmitteln und deren Dosierung und Förderung.

Überraschend war, daß die nach dem erfindungsgemäßen Verfahren erhaltenen Farbstoffe in kurzen dünnen Nadeln erhalten werden, die leicht in für die Anwendung zum Färben von Fasermaterialien geeignete feindisperse Formen überfuhrt werden können. Demgegenüber erhält man nach den Verfahren der DE-C 11 81 349 und 11 76 777 sowohl in wäßrigen wie auch im alkoholischwäßrigen Medium lange stabförmige Kristalle, deren Länge etwa das 10- bis 20-fache der Kantenlänge beträgt und die nur unter großem Aufwand in feindisperse Formen überführt werden können.

Als 1-Amino-4-nitroanhtrachinon-2-carbonsäureamide (II) kommen solche in Betracht, bei denen R $C_1$- bis $C_6$-Alkyl, 2-($C_1$- bis $C_6$-Alkoxy)-ethyl, 3-($C_1$- bis $C_6$-Alkoxy)-propyl oder 3-[2'-($C_1$- bis $C_4$-Alkoxy)-ethoxy]-ethyl ist.

Bevorzugt sind Amide (II), bei denen R für 2-n-Butoxyethyl, 3-Methoxy-propyl, 3-Ethoxypropyl, 3-n- oder i-Propoxypropyl oder für 3-[2'-Methoxy-ethoxy]-propyl steht. Von diesen Resten ist für R der 3-Methoxypropylrest besonders bevorzugt, da die mit diesem Amid erhaltenen Farbstoffe aus coloristischer und anwendungstechnischer Sicht besonderes Interesse haben.

Das erfindungsgemäße Verfahren wird im allgemeinen so durchgeführt, daß man - bezogen auf das zur Anwendung kommende 1-Amino-4-nitroanthrachinon-2-carbonsäureamid (II) (im folgenden auch als Nitrasäureamid bezeichnet) - eine Lösung des quartären Ammoniumsalzes in der 2- bis 8-, vorzugsweise der 3- bis 4-fachen Gewichtsmenge Wasser vorlegt. Die Menge an Quartärsalz beträgt in der Regel das 0,15- bis 0,5-fache von (II).

In diese Lösung trägt man (II) und die Puffersubstanz ein. Danach wird der pH-Wert des Gemisches, falls erforderlich, auf 7,5 bis 8,5 eingestellt und das Gemisch auf Temperaturen von 60 bis 100° C erwärmt. Durch Zugeben von Cyanid reagiert (II) zum Farbstoff in exothermer Reaktion. In den meisten Fällen ist die Reaktion nach der Cyanidzugabe bereits beendet, gegebenenfalls wird die Umsetzung durch Rühren bei 60 bis 100° C vervollständigt.

Das Reaktionsgemisch wird in üblicher Weise aufgearbeitet. Dazu wird nach dem Abkühlen bei etwa 60° C das überschüssige Cyanid durch Zugeben von 0,2 bis 0,3 Mol Wasserstoffperoxid (in Form einer 30 gew.%igen Lösung) je Mol angewandtes Cyanid vernichtet, das Reaktionsgemisch filtriert, der Preßkuchen neutral und hell gewaschen.

Der erhaltene Farbstoff (I) kann in bekannter Weise zu Zubereitungen verarbeitet werden.

Die Menge an Quartärsalz liegt bei der 0,15 bis 0,5-, vorzugsweise bei der 0,3 bis 0,4-fachen Gewichtsmenge, bezogen auf Nitrasäureamid (II).

Als quartäre Ammoniumverbindungen - auch als Quartärsalze bezeichnet - kommen in Wasser lösliche

Trialkylbenzyl-, Dibenzyldialkyl- und Tetraalkylammoniumsalze wie die des Tri-$C_1$- bis $C_4$-alkylbenzylammoniums, Di-$C_1$-bis $C_4$-alkyldibenzylammoniums, Tris-$C_1$- bis $C_4$-alkyl-$C_8$- bis $C_{18}$-alkylammoniums, außerdem Benzylpyridinium-und $C_{10}$- bis $C_{20}$-Alkylpyridiniumsalze oder Gemische dieser Salze in Betracht.

Im einzelnen sind als quartäre Ammoniumsalze z.B. die des Trimethylbenzyl-, Triethylbenzyl-, Tripropylbenzyl-, Dimethyldibenzyl-, Diethyldibenzyl-, Dipropyldibenzyl-, Tetramethyl-, Tetraethyl-, Tetra-n-propyl-, Tetra-n-butyl-, Trimethyl-octyl, Trimethyl-decyl-, Trimethyl-lauryl-, Trimethyl-$C_{12}$- bis $C_{14}$-alkyl-, Trimethyl-palmityl-, Trimethylstearyl- sowie die des entsprechenden Triethyl-$C_8$- bis $C_{18}$-alkyl-ammoniums und deren Gemmische zu nennen.

Als Ammoniumsalze sind die des Trimethylbenzyl-, Dimethyldibenzyl-, Trimethyllauryl- und des Trimethyl-$C_{12}$- bis $C_{14}$-alkylammoniums bevorzugt.

Die Ammoniumsalze werden in der Regel in Form der Halogenide wie der Chloride oder Bromide, der Sulfate oder der Alkylsulfate, z.B. der Methosulfate und Ethosulfate verwendet.

Als Puffersubstanzen kommen die aus dem Stand der Technik bekannten in Betracht, z.B. Natriumhydrogencarbonat, Natrium- und Kaliumcarbonat, Dinatriumhydrogenphosphat, Dikaliumhydrogenphosphat und Gemische aus primären und tertiären Phosphaten.

Außerdem können auch andere unter den Reaktionsbedingungen nicht in unerwünschter Weise reagierende Puffersubstanzen zugegeben werden, die es erlauben, den pH-Wert der wäßrigen Suspension vor dem Zugeben des Cyanids auf pH 7,5 bis 8,5 und am Ende der Reaktion auf pH 9,0 bis 10,5 zu puffern. Hierfür kommen z.B. Citrate, Oxalate und/oder Acetate der Alkalimetalle in Betracht.

Als unter den Reaktionsbedingungen geeignete Puffersubstanzen kommen außerdem leicht verseifbare Ester in Betracht, z.B. Glykolmonoester wie Ethylenglykolacetat, Ethylenglykolmonomethyletheracetat, Glykoldiester wie Ethylenglykoldiacetat, Kohlensäuredialkylester wie Dimethyl- und Diethylcarbonat in Betracht.

Vor der Zugabe oder zu Beginn der Zugabe des Cyanids wird das Gemisch in Gegenwart der Puffersubstanz gegebenenfalls auf pH 7,5 bis 8,5 eingestellt.

Die Menge an Puffersubstanz wird so bemessen, daß am Ende der Zugabe des Cyanids bzw. am Ende der Umsetzung der pH-Wert im Rekationsgemisch bei 9 bis 10,5 liegt. Vorzugsweise liegt der pH-Wert am Ende der Reaktion bei pH 9,0 bis 9,7.

Im Falle der Anwendung von Natriumhydrogencarbonat, Natriumcarbonat oder Dinatriumhydrogenphosphat benötigt man je Mol (II) 0,8 bis 1,2 Mol dieser Puffersubstanzen.

Die für die Einhaltung des gewünschten pH-Wertes erforderliche Menge an Puffersubstanz kann vor Beginn oder zu Beginn der Umsetzung auf einmal oder während der Umsetzung im erforderlichen Maße in Portionen oder kontinuierlich zugegeben werden.

Als Cyanide kommen wie bei den Verfahren des Standes der Technik lösliche, vorzugsweise die Alkalimetallcyanide wie Kalium- und Natriumcyanid und ferner Calciumcyanid in Betracht. Vorzugsweise werden die Cyanide in Form ihrer wäßrigen 20 bis 40 gew.%igen Lösung verwendet, da diese am besten dosiert werden können.

Aus wirtschaftlichen Gründen ist Natriumcyanid bevorzugt.

Die Umsetzung von (II) mit dem Cyanid erfolgt bei Temperaturen im Bereich von 60 bis 100°C, vorzugsweise im Bereich von 70 bis 95°C und insbesondere im Bereich von 85 bis 90°C. Da die Reaktion von (II) mit dem Cyanid exotherm verläuft, braucht das Gemisch nur zu Beginn der Reaktion auf die gewünschte Temperatur gebracht werden. Durch die Zugabe von Cyanid (Dauer 1,5 bis 4 Stunden je nach Temperatur), kann die gewünschte Reaktionstemperatur gehalten werden. Gegen Ende der Reaktion wird das Gemisch gegebenenfalls durch Erwärmen auf der gewünschten Temperatur gehalten.

In der Regel ist die Umsetzung nach dem Zugeben des Cyanids beendet. Gegebenenfalls wird das Reaktionsgemisch noch bis zur Beendigung der Umsetzung von (II) auf Temperatur gehalten.

Die Reaktion ist im allgemeinen nach 2 bis 6, in den meisten Fällen nach 2,5 bis 4 Stunden beendet.

Bei Reaktionstemperaturen unterhalb 80°C erhält man Verfahrensprodukte, die Polyesterfasern trüber färben als die bei 80 bis 100°C erhaltenen Produkte.

Die reinsten Färbungen werden mit Farbstoffen erhalten, die durch Umsetzen von (II) mit Cyanid bei 85 bis 90°C erhalten werden, weshalb dieser Bereich bei dem vorliegenden Verfahren besonders bevorzugt ist.

Temperaturen >100°C brisngen bei der Umsetzung keinen Vorteil. Im Gegentei wurden Nachteile festgestellt: eine verminderte Ausbeute und bei dem mit diesem Verfahrensprodukten erhaltenen Färbungen ist die Brillanz geringer. Ein weiterer Nachteil ist, daß die Reaktion in geschlossenen Apparaten durchfgeführt werden muß.

Das Verhältnis der Farbstoffe (I) mit X = >NH (= Iminoimidfarbstoff (Ia) und des Farbstoffs (I) mit X = >O (= Imidfarbstoff (Ib)) im Verfahrensprodukt kann durch die Reaktionstemperatur bei der Umsetzung von (II) beeinflußt werden. So erhält man bei den tieferen Temperaturen (70 bis 75°C) ein Gemisch von (I) mit

einem höheren Anteil an Iminoimidfarbstoff (Ia).

Weiter wurde gefunden, daß der Anteil an Farbstoff (Ia) im Verfahrensprodukt erhöht werden kann, wenn man die Umsetzung bei pH-Werten zwischen 9,5 und 10,5 durchführt. Die in diesem Bereich erhaltenen Farbstoffe färben Polyesterfasermaterial in brillanten Blautönen, die jedoch nach Rot verschoben sind.

Das Verfahren wird durch die folgenden Beispiele zusätzlich erläutert. Die im folgenden angegebenen Teile und Prozente beziehen sich auf das Gewicht.

Das Verfahren wird anhand von 1-Amino-4-nitroanthrachinon-2-carbonsäure-2'-methoxypropylamid- in den Beispielen als Nitrasäureamid bezeichnet - belegt.

Beispiel 1

In 700 Teilen Wasser und 200 Teilen einer 35%igen wäßrigen Lösung von $C_{12}$- bis $C_{14}$-Alkyltrimethylammoniumchlorid werden 275 Teile Nitrasäureamid und 50 Teile Natriumbicarbonat eingetragen. Die Mischung wird unter Rühren auf 90 °C erwärmt (pH 7,7). Bei dieser Temperatur läßt man 500 Teile einer 30 %igen Natriumcyanidlösung innerhalb von 2,5 Stunden so zulaufen, daß die Temperatur ohne zusätzliche externe Badheizung bei 90 °C gehalten wird. Danach rührt man noch 1,5 Stunden bei 90 °C nach (pH 9,2; Probe zeigt vollständige Umsetzung). Man kühlt das Reaktionsgemisch auf 60 °C ab und gibt 85 Teile Wasserstoffperoxid (30 %ig) so zu, daß eine Temperatur von 70 bis 75 °C eingehalten wird (eine Probe zeigt nach der Zugabe die vollständige Vernichtung des Cyanids an). Das Reaktionsgemisch wird filtriert und der Preßkuchen mit warmem Wasser bis zum neutralen und farblosen Ablauf gewaschen. Nach dem Trocknen bei 80 °C (Vakuum) erhält man 255 Teile eines dunkelblauen Farbstoff-Pulvers, das Polyester farbstark und im brillanten blauen Farbton anfärbt. Das Verfahrensprodukt entspricht dem als C.I. Disperse Blue 87 bekannten Farbstoff der chemischen Zusammensetzung und in der Reinheit. Der Farbstoff besteht aus kleinen einheitlichen Nadeln von im Mittel 2 bis 4 µm Kantenlänge.

Beispiel 2

Vorgelegt werden 3 000 Teile Wasser, 835 Teile Trimethyllaurylammoniummethosulfat in Form der 40 %igen wäßrigen Lösung und 240 Teile Natriumbicarbonat. Dann werden 1 180 Teile Nitrasäureamid eingetragen und die Suspension auf 85 °C erwärmt. Nun werden 2500 Teile 30 %ige wäßrige Natriumcyanidlösung in 3 Stunden so zudosiert, daß die Temperatur zwischen 85 bis 90 °C gehalten wird. Nach der Cyanidzugabe wird noch 30 Minuten nachgerührt. Eine Probe zeigt dann die vollständige Umsetzung zum Farbstoff an. Man kühlt auf 50 °C ab und läßt 400 Teile Wasserstoffperoxidlösung (30 %ig) so zulaufen, daß sich eine Temperatur von 70 bis 75 °C einstellt. Danach zeigt eine Probe kein Cyanid mehr an. Das Reaktionsgemisch wird filtriert und der Preßkuchen mit warmem Wasser bis zum neutralen und farblosen Ablauf gewaschen. Nach dem Trocknen bei 80 °C (Vakuum) erhält man 1 040 Teile eines Farbstoff-Pulvers, das Polyester in farbstarken, brillanten Blautönen anfärbt und in den anderen Eigenschaften dem nach Beispiel 1 erhaltenen Farbstoff entspricht.

Beispiel 3 (Vergleich)

In 700 Teile Wasser werden 275 Teile Nitrasäureamid eingetragen und 50 Teile Natriumbicarbonat eingetragen. Die Mischung wird auf 90 °C aufgeheizt (pH 7,6). Bei dieser Temperatur läßt man 500 Teile einer 30 %igen wäßrigen Natriumcyanidlösung innerhalb von 4 Stunden zulaufen. In 2-stündigem Proberhythmus wird der Fortgang der Reaktion festgestellt. Auch nach 16-stündiger Reaktion bei 90 °C ist das Nitrasäureamid noch nicht vollständig umgesetzt (pH: 9,6). Die Reaktion wurde abgebrochen, das überschüssige Cyanid mit Wasserstoffperoxidlösung wie in Beispiel 1 vernichtet und der Farbstoff durch Filtrieren isoliert, das Filtergut bis zum neutralen und farblosen Ablauf gewaschen. Nach dem Trocknen bei 80 °C (Vakuum) erhält man 245 Teile eines Farbstoffpulvers, das Polyester in stark trüben blauen Tönen färbt. Unter dem Mikroskop ist deutlich ein Gemisch aus den blauen Farbstoffnadeln und den roten balkenförmigen Kristallen des Nitrasäureamids festzustellen.

Beispiel 4

Zu 700 Teilen Wasser werden 200 Teile einer 35 %igen wäßrigen Lösung von $C_{12}$- bis $C_{14}$-Alkyltrimethylammoniumchlorid, 25 Teile Dinatriumhydrogenphosphat, 20 Teile Natriumdihydrogenphosphat und 275 Teile Nitrasäureamid unter Rühren gegeben (pH 8,0). Die Suspension wird auf 85 °C erwärmt.

Dann werden 500 Teile einer 30 %igen wäßrigen Natriumcyanidlösung innerhalb von 2,5 Stunden so zugegeben, daß die Temperatur zwischen 85 und 90 °C gehalten wird. Nach der Zugabe des Cyanids wird noch 2 Stunden bei 90 °C nachgerührt (pH-Wert 9,7). Die Kontrollprobe zeigt dann vollständige Umsetzung des Nitrasäureamids zum Farbstoff an. Bei 60 °C läßt man 85 Teile Wasserstoffperoxid (30 %ig) so zulaufen, daß eine Temperatur von 70 bis 75 °C eingehalten wird. Eine Probe zeigt die vollständige Entfernung des Cyanids. Das Reaktionsgemisch wird filtriert und das Filtergut mit warmen Wasser bis zum neutralen und farblosen Ablauf gewaschen. Nach dem Trocknen bei 80 °C (Vakuum) erhält man 248 Teile eines Farbstoffpulvers, das Polyester in brillanten, farbstarken Blautönen anfärbt.

Beispiel 5

Zu 700 Teilen Wasser werden 200 Teile einer 35 %igen wäßrigen Lösung von $C_{12}$- bis $C_{14}$-Alkyltrimethylammoniumchlorid, 50 Teile Ethylenglykolmonomethyletheracetat Suspension wird auf 85 °C erwärmt und 500 Teile einer 30 %igen wäßrigen Natriumcyanidlösung innerhalb von 2 Stunden so zudosiert, daß die Reaktionstemperatur zwischen 80 und 90 °C gehalten wird. Nach der Cyanidzugabe wird noch 2 Stunden bei 90 °C nachgerührt (pH-Wert: 9,5). Nach Kontrollprobe ist die Umsetzung des Nitrasäureamids zum Farbstoff vollständig. Die Aufarbeitung erfolgt wie in Beispiel 4. Ausbeute: 256 Teile eines Farbstoffpulvers, das Polyester in brillanten, farbstarken Blautönen färbt.

Beispiel 6

In eine Mischung aus 4 500 Teilen und 1 500 Teilen 30 %igen wäßrigen Lösung von $C_{12}$- bis $C_{14}$-Alkyltrimethylammoniumchlorid werden 1 149 Teile Nitrasäureamid eingetragen. Das Gemisch wird zu einer homogenen Suspension verrührt. Danach werden 735 Teile Natriumcyanid eingetragen. Nach dem Auflösen des Cyanids hat sich ein pH-Wert von 11,4 eingestellt. Durch Zutropfen von 50 Teilen Ethylenglykoldiacetat (aus dem bereitgestellten Vorrat von insgesamt 365 Teilen) wird der pH-Wert auf 9,0 heruntergestellt. Dann wird das Gemisch unter Rühren langsam aufgeheizt, wobei ab 60 °C eine leicht exotherme Reaktion einsetzt und die Temperatur ohne äußere Wärmezufuhr auf ca. 75 °C ansteigt. Es wird 2 Stunden bei 70 bis 75 °C gerührt, wobei der pH-Wert im Reaktionsgemisch durch Zudosieren von Glykoldiacetat zwischen 9,0 und 9,3 gehalten wird. Wenn die Kontrollprobe vollständige Umsetzung anzeigt, werden 500 Teile Wasserstoffperoxid (30 %ige Lösung) so zugetropft, daß die Temperatur zwischen 70 und 75 °C gehalten wird. Nach einstündigem Rühren wird auf vollständige Beseitigung der Cyanidionen geprüft. Die Suspension wird filtriert, das Filtergut mit warmem Wasser bis zum neutralen und praktisch farblosen Ablauf gewaschen. Nach Vakuumtrocknung bei 80 °C resultieren 1 095 Teile eines dunkelblauen Farbstoffpulvers, das Polyesterfasern in brillanten Blautönen anfärbt, wobei die Nuance ein wenig röter als die von Disperse Blue 87 und des nach Beispiel 1 erhaltenen Farbstoffs ist. Der erhaltene Farbstoff ist ein Gemisch aus 73,8 % Iminoimidfarbstoff (Ia) und 21,4 % Imidfarbstoff (Ib). Beim Disperse Blue 87 liegt das Verhältnis bei ca. 63:33 %.

Beispiel 7

Man verfährt wie in Beispiel 6, jedoch wird der pH-Wert in der wäßrigen Phase durch Zugabe von Glykoldiacetat (Verbrauch 182 Teile) im Bereich zwischen 9,5 und 9,7 gehalten. Nach dem Aufarbeiten und Trocknen erhält man 1 085 Teile eines dunkelblauen Farbstoffpulvers, das Polyesterfasern ebenfalls in brillanten Blautönen färbt. Der Farbton ist im Vergleich zum Farbstoff des Beispiels 6 etwas röter. Der Farbstoff erhält 83 % Iminoimidfarbstoff (Ia) und nur 13,6 % Imidfarbstoff (Ib).

Beispiel 8

Man verfährt wie in Beispiel 6, jedoch wird der pH-Wert in der wäßrigen Phase durch Zugabe von Glykoldiacetat (Verbrauch 39 Teile) bei 10,0 gehalten. Nach 3 Stunden Reaktionszeit wird, wie in Beispiel 6 beschrieben, aufgearbeitet und getrocknet. Man erhält 988 Teile eines dunkelblauen Pulvers, das Polyesterfasern in brillanten Blautönen anfärbt, wobei der Farbton noch etwas weiter nach Rot verschoben ist als im Beispiel 7. Das Komponentenverhältnis beträgt hier 90 % Iminoimidfarbstoff (Ia) und 2,6 % Imidfarbstoff (Ib).

**Patentansprüche**

1. Verfahren zur Herstellung von blauen anthrachinoiden Dispersionsfarbstoffen durch Umsetzen von 1-Amino-4-nitroanthrachinoncarbonsäueamid der Formel (II)

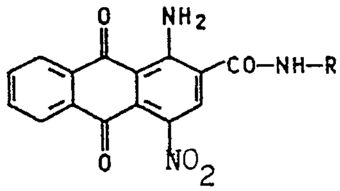

(II),

in der R für $C_1$- bis $C_6$-Alkyl, 2-($C_1$- bis $C_6$-Alkoxy)-ethyl, 3-($C_1$- bis $C_6$-Alkoxy)-propyl oder 3-[2'(-$C_1$- bis $C_4$-Alkoxy)-ethoxy]-propyl steht, mit Cyaniden in wäßrigem Medium in Gegenwart von Hydroxylionen abfangenden Mitteln bei Temperaturen von oberhalb 20 °C, dadurch gekennzeichnet, daß man die Umsetzung in Wasser im pH-Bereich von 7,5 bis 10,5 und in Gegenwart mindestens eines quartären Ammoniumsalzes bei 60 bis 100 °C durchführt.

2. Verfahren gemäß Anspruch 1, dadurch gekennzeichnet, daß die Umsetzung im pH-Bereich 7,6 bis 10 erfolgt.

3. Verfahren gemäß Anspruch 1 oder 2, dadurch gekennzeichnet, daß die Umsetzung bei 70 bis 95 °C erfolgt.

4. Verfahren gemäß Anspruch 1 oder 2, dadurch gekennzeichnet, daß die Umsetzung, bei 85 bis 90 °C erfolgt.

5. Verfahren gemäß Anspruch 1, 2, 3 oder 4, dadurch gekennzeichnet, daß man als quartäre Ammoniumsalze solche des Trialkylbenzylammoniums, des Dibenzyldialkylammoniums, des Tri-$C_1$- bis $C_4$-Alkyl-$C_8$- bis $C_{18}$-alkylammoniums, des Tetra-$C_1$- bis $C_4$ -alkylammoniums in Form der wasserlöslichen Salze verwendet.

6. Verfahren gemäß Anspruch 1, 2, 3 oder 4, dadurch gekennzeichnet, daß man wasserlösliche Salze des Trimethylbenzyl-, Dimethyldibenzyl-, Trimethyllauryl- und/oder Trimethyl-$C_{12}$- bis $C_{14}$-alkylammoniums verwendet.

## Claims

1. A process for the preparation of a blue anthraquinoid disperse dye by reacting a 1-amino-4-nitroanthraquinonecarboxamide of the formula (II)

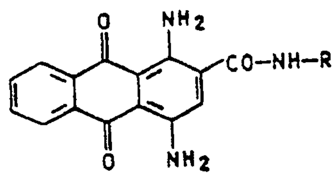

(II)

where R is $C_1$-$C_6$-alkyl, 2-($C_1$-$C_6$-alkoxy)ethyl, 3-($C_1$-$C_6$-alkoxy)propyl or 3-[2'-($C_1$-$C_4$-alkoxy)ethoxy]-propyl, with a cyanide in an aqueous medium in the presence of a hydroxyl ion acceptor at above 20 °C, wherein the reaction is carried out in water at a pH of 7.5 to 10.5 and in the presence of one or more quaternary ammonium salts at from 60 to 100 °C.

2. A process as claimed in claim 1, wherein the reaction is carried out at a pH of from 7.6 to 10.

3. A process as claimed in claim 1 or 2, wherein the reaction is carried out at from 70 to 95 °C.

4. A process as claimed in claim 1 or 2, wherein the reaction is carried out at from 85 to 90 °C.

5. A process as claimed in claim 1, 2, 3 or 4, wherein the quaternary anmonium salts used are water-soluble trialkylbenzylammonium, dibenzyldialkylammonium, tri-$C_1$-$C_4$-alkyl-$C_8$-$C_{18}$-alkylammonium or tetra-$C_1$-$C_4$-alkylammonium salts.

6. A process as claimed in claim 1, 2, 3 or 4, wherein water-soluble trimethylbenzyl-, dimethyldibenzyl-, trimethyllauryl- and/or trimethyl-$C_{12}$-$C_{14}$-alkylammonium salts are used.

## Revendications

1. Procédé de fabrication de colorants dispersés, anthraquinoïdiques₁ bleus, par la réaction de l'amide de l'acide 1-amino-4-nitroanthraquinonecarboxylique de la formule (II)

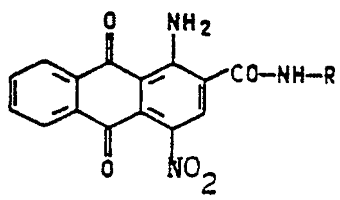

(II),

dans laquelle R représente un radical alkyle en $C_1$ à $C_6$, 2-(alcoxy en $C_1$ à $C_6$)-éthyle, 3-(alcoxy en $C_1$ à $C_6$ )-propyle ou 3-/2'(alcoxy en $C_1$-$C_4$)-éthoxy/-propyle, avec des cyanures, en milieu aqueux, en présence d'agents acceptant les ions hydroxyle, à des températures supérieures à 20°C, caractérisé en ce que l'on réalise la réaction dans de l'eau, à une température de 60 à 100°C, dans la plage des pH de 7,5 à 10,5 et en présence d'au moins un sel d'ammonium quaternaire.

2. Procédé suivant la revendication 1, caractérisé en ce que la réaction s'opère dans la plage des pH de 7,6 à 10.

3. Procédé suivant la revendication 1 ou 2, caractérisé en ce que la réaction s'opère à la température de 70 à 95°C.

4. Procédé suivant la revendication 1 ou 2, caractérisé en ce que la réaction s'opère à la température de 85 à 90°C.

5. Procédé suivant la revendication 1, 2, 3 ou 4, caractérisé en ce que l'on utilise, à titre de sels d'ammonium quaternaire, ceux du trialkylbenzylammonium, du dibenzyldialkylammonium, du tri-alkyl en $C_1$ à $C_4$-alkyl en $C_8$ à $C_{18}$-ammonium, du tétraalkyl en $C_1$ à $C_4$-ammonium, sous la forme de sels solubles dans l'eau.

6. Procédé suivant la revendication 1, 2, 3 ou 4, caractérisé en ce que l'on utilise des sels solubles dans l'eau du triméthylbenzyl-, diméthyldibenzyl-, tétraméthyllauryl- et/ou triméthyl-alkyl en $C_{12}$ à $C_4$-ammonium.